# EUROPÄISCHE PATENTANMELDUNG

(11) **EP 1 493 973 A2**
(43) Veröffentlichungstag der Anmeldung: **05.01.2005**
(21) Anmeldenummer: 04015513.7
(22) Anmeldetag: 01.07.2004
(51) Int. Cl.: F24D 3/14

(54) **Vorrichtung zum Halten von temperierbaren Elementen, insbesondere Rohren**

(30) Priorität: 04.07.2003 DE 10330138
(71) Anmelder: Uponor Innovation AB, 513 81 Fristad (SE)
(72) Erfinder: Riesselmann, Franz-Josef, 49393 Lohne (DE); Claussen, Jörg, 48329 Havixbeck (DE)
(74) Vertreter: Hilleringmann, Jochen, Dipl.-Ing.

(57) **Zusammenfassung**

Die Vorrichtung zum Halten von temperierbaren Elementen, insbesondere Rohren, ist versehen mit einem Plattenkörper (10) mit Unterseite (12) und einer Oberseite (14), die eine Oberflächenstruktur zur Halterung eines temperierbaren Elements, wobei der Plattenkörper (10) geschäumtes Metall aufweist.

## Beschreibung

Die Erfindung betrifft eine Vorrichtung zum Halten von temperierbaren Elementen, insbesondere Rohren. Eine derartige Vorrichtung wird insbesondere für Flächenheizungs-/Kühlsysteme verwendet und dient insbesondere dem nachträglichen Einbau von derartigen Systemen in beispielsweise Altbauten.

Trockenbausysteme für den nachträglichen Einbau von beispielsweise Fußbodenheizungen in Altbauten weisen einen Plattenkörper auf, der aus Kunststoff, Gips, Holz besteht (WO-A-02/37032 und DE-C-100 40 643). Der Plattenkörper liegt mit seiner Unterseite auf dem mit der Fußbodenheizung zu versehenden Boden auf und ist an seiner gegenüberliegenden Oberseite mit einer Oberflächenstruktur zur Halterung von Rohren versehen. Bei dieser Oberflächenstruktur handelt es sich beispielsweise um Rillen in unterschiedlichen Ausrichtungen mit geraden und gegebenenfalls auch gekrümmten Abschnitten, in die das Rohr eingelegt wird. Die Tiefe dieser Rillen ist dabei in etwa gleich dem Außendurchmesser des zu verlegenden Rohres, so dass das Rohr im verlegten Zustand bündig mit der Oberseite des Plattenkörpers abschließt. Die Rohre selbst können in Wärmeleitblechen angeordnet sein. Diese Wärmeleitbleche weisen sickenförmige geradlinige und gegebenenfalls gebogene Nuten auf, in die das Rohr gelegt wird. Anschließend werden dann die sickenförmigen Ausbildungen der Wärmeleitbleche in den Rillen des Plattenkörpers positioniert. Über die Wärmeleitbleche kommt es zu einer Verteilung der von dem Heizmedium gelieferten Energie an die Umgebung. Dies ist angesichts des geringen Gesamtaufbaus des Trockenbausystems für eine gleichmäßige Erwärmung der Fläche (hier des Bodens) von Vorteil. Schließlich wird auf die Plattenkörper (die mit oder ohne Wärmeleitbleche versehen sind) der Oberboden in Form von Dielen, Fliesen oder Laminat bzw. Teppichboden aufgebracht. Im zuletzt genannten Fall ist noch eine dünne Estrich- bzw. Mörtelschicht auf den Plattenkörpern erforderlich. Die Installation einer Flächenheizung der vorstehend beschriebenen Art ist recht aufwendig, was insbesondere mit der Montage der Wärmeleitbleche zu tun hat.

Aus DE-A-44 35 686 und DE-A-37 13 203 ist es bekannt, Estrich zur Erhöhung der Wärmeleitfähigkeit Aluminiumgranulat bzw. -pulver beizumischen.

Der Erfindung liegt die Aufgabe zugrunde, eine Vorrichtung zum Halten von temperierbaren Rohren zu schaffen, die die Installation von Flächentemperiersystemen erleichtert.

Zur Lösung dieser Aufgabe wird mit der Erfindung eine Vorrichtung zum Halten von temperierbaren Elementen, bei denen es sich z.B. um Heizdrähte oder Heiz-/Kältemedium führende Rohre handelt, vorgeschlagen, die versehen ist mit einem Platten körper mit einer Unterseite und einer Oberseite, die eine Oberflächenstruktur zur Halterung eines temperierbaren Elements aufweist, wobei der Plattenkörper geschäumtes Metall aufweist.

Die Erfindung wird nachfolgend für ein als Rohr ausgebildetes temperierbares Element beschrieben.

Nach der Erfindung wird als Material für den Plattenkörper geschäumtes Metall, beispielsweise geschäumtes Aluminium verwendet. Damit ist es möglich, den Plattenkörper sowohl zur Halterung der Rohre als auch für die großflächige Abgabe von Wärme an die Umgebung (bei einer Flächenheizung) bzw. für die großflächige Aufnahme von Wärme (bei einer Flächenkühlung) zu verwenden. Der Plattenkörper der erfindungsgemäßen Vorrichtung weist also eine im Wesentlichen ebene Unterseite auf, während die Oberseite strukturiert ist. Der gesamte Plattenkörper besteht aus geschäumten Metall. Wegen seiner ebenen Unterseite lässt sich der Plattenkörper anders als ein Wärmeleitblech, das eine Sicke aufweist, wie die Wärmeisolationsplatten von Flächenheizungssystemen verlegen.

Weitere Vorteile der erfindungsgemäßen Vorrichtung sind eine hohe Festigkeit und Tragfähigkeit, ein geringes Gewicht (die Dichte von geschäumten Aluminium beträgt weniger als 1 g/cm³) und die Möglichkeit der Abschirmung von Räumen gegen elektromagnetische Strahlung.

Die Oberflächenstruktur des Plattenkörpers der erfindungsgemäßen Vorrichtung kann grundsätzlich so ausgebildet sein, wie man es von den bekannten Trockenbausystemen her kennt. Hier bieten sich neben Rillen bzw. Nuten auch Noppenplatten an, die an ihrer Oberseite Haltevorsprünge aufweisen, welche beidseitig an dem zu verlegenden Rohr anliegen.

Zum Zwecke des Ausgleichs von Unebenheiten des Untergrundes ist es vorteilhaft, wenn die Unterseite des Plattenkörpers mit einer (weichen) Ausgleichsmaterialschicht versehen ist. Diese Ausgleichsmaterialschicht kann darüber hinaus auch die Funktion einer Trittschalldämmung übernehmen. Alternativ ist es aber auch möglich, dass zusätzlich zu der Ausgleichsmaterialschicht auch noch eine Trittschalldämmschicht vorhanden ist. Bei der letzteren handelt es sich zweckmäßigerweise um eine (dünne) Kunststoffschaumfolie aus beispielsweise Polyethylen oder dergleichen Polyolefin- bzw. Polymermaterial.

Zum Schutz des Eindringens von beispielsweise Feuchtigkeit ist es zweckmäßig, wenn zumindest die Oberseite des Plattenkörpers mit einer die Außenhaut des Plattenkörpers bildenden Folie überzogen ist.

Die Erfindung wird nachfolgend anhand der Zeichnung näher erläutert. Im Einzelnen zeigen:
- Fign. 1 und 2: eine Draufsicht und eine Schichtansicht eines Plattenkörpers gemäß einem ersten Ausführungsbeispiel der Erfindung und
- Fign. 3 und 4: eine Draufsicht und eine Schichtansicht eines Plattenkörpers gemäß einem zweiten Ausführungsbeispiel der Erfindung.

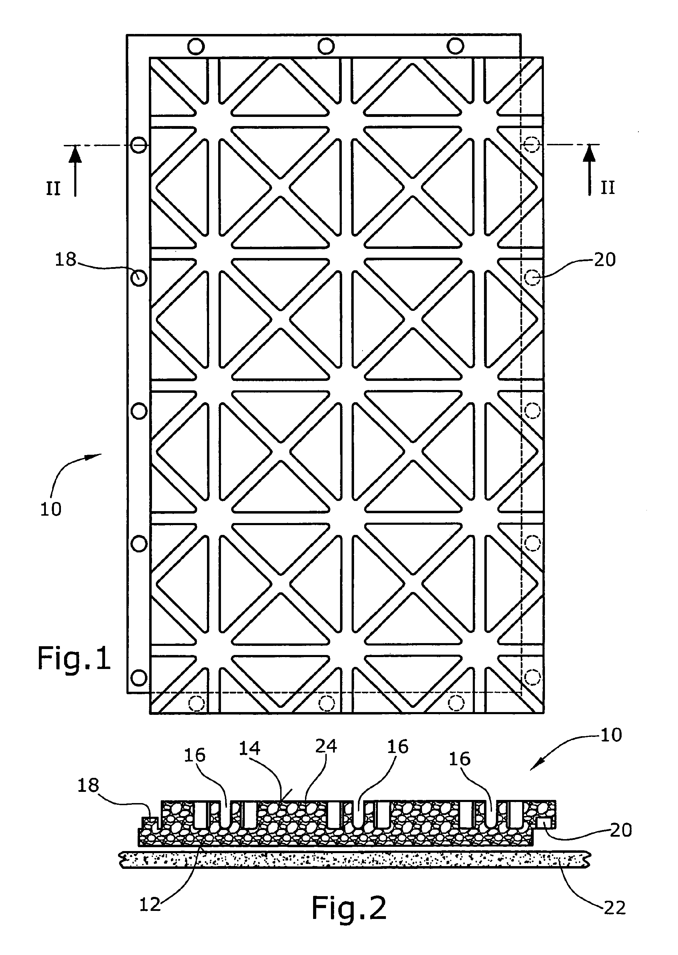

Fig. 1 zeigt in Draufsicht einen Platten körper 10 gemäß einem ersten Ausführungsbeispiel der erfindungsgemäßen Vorrichtung. Für eine Trockenbau-Fußbodenheizung werden mehrere dieser Plattenkörper 10 auf einem Untergrund (beispielsweise Zimmerboden) nebeneinander gelegt. Jeder Plattenkörper 10 besteht aus geschäumtem Metall (in diesem Ausführungsbeispiel Aluminium) und weist eine ebene Unterseite 12 sowie eine strukturierte Oberseite 14 auf (siehe Fig. 2). In der Oberseite 14 befinden sich eine Vielzahl von winklig zueinander verlaufenden Rillen bzw. Nuten 16, die der Aufnahme von Heizmedium führenden Rohren (nicht dargestellt) dienen. Benachbarte Plattenkörper 10 sind nach dem Nut-Feder-Prinzip untereinander verbunden. So weist der Plattenkörper 10 an jeweils einer Längs- und Querseite Vorsprünge 18 auf, während sich an der jeweils anderen Quer- und Längsseite korrespondierende Aufnahmevertiefungen 20 befinden. Unterhalb der verlegten Plattenkörper 10 befindet sich eine Trittschalldämmschicht 22 aus geschäumtem Kunststoffmaterial, die darüber hinaus die Funktion des Ausgleich von Unebenheiten des Untergrundes übernimmt. Die Oberseite 14 des Plattenkörpers 10 ist mit einer dünnen Folie 24 überzogen.

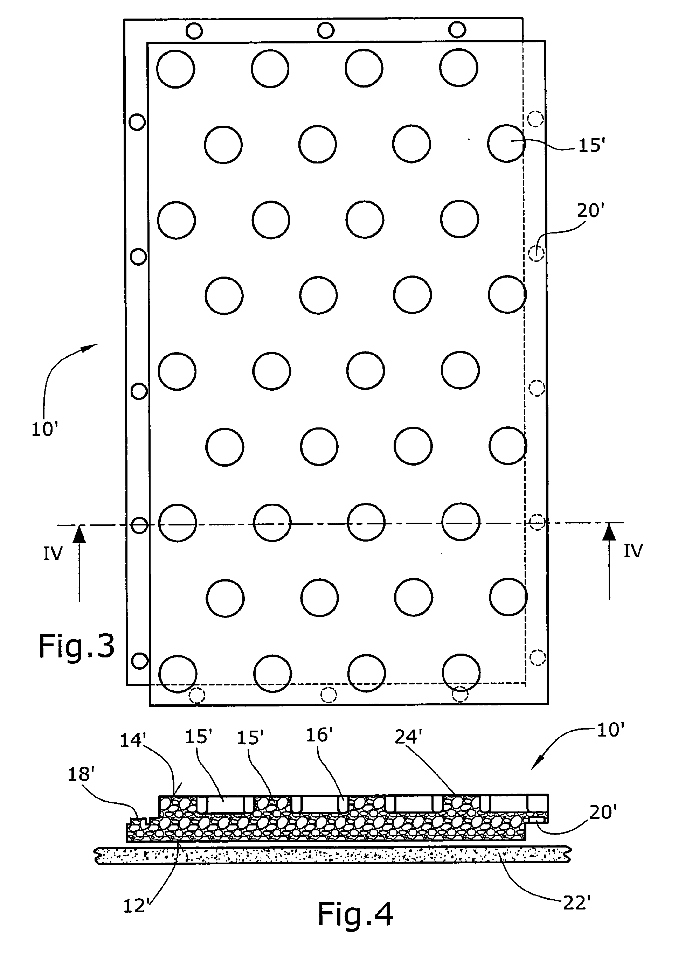

In den Fign. 3 und 4 ist ein alternatives Ausführungsbeispiel eines Plattenkörpers 10' dargestellt. Dieser Plattenkörper 10' unterscheidet sich vom Plattenkörper 10 der Fign. 1 und 2 durch die Ausbildung der Oberseite 14'. Dort sind, wie insbesondere anhand von Fig. 3 zu erkennen ist, eine Vielzahl von Haltevorsprüngen 15' angeordnet, zwischen denen sich Vertiefungen 16' zur Aufnahme der (nicht dargestellt) Rohre bilden. Im Übrigen stimmt die Konstruktion des Plattenkörpers 10' mit der der Fign. 1 und 2 überein, weshalb für gleiche Teile die gleichen Bezugszeichen, jedoch jeweils mit Strich versehen, verwendet sind.

Die Plattenkörper 10 und 10' beider Ausführungsbeispiele der Erfindung haben den Vorteil der Vereinigung der Rohrhalte- und Energieverteilfunktion in einem Bauteil, das überdies recht leichtgewichtig ist.

## Patentansprüche

1. Vorrichtung zum Halten von temperierbaren Elementen, insbesondere Rohren, mit
- einem Plattenkörper (10) mit einer Unterseite (12) und einer Oberseite (14), die eine Oberflächenstruktur zur Halterung eines temperierbaren Elements aufweist,
**dadurch gekennzeichnet,**
- **dass** der Plattenkörper (10) geschäumtes Metall aufweist.

2. Vorrichtung nach Anspruch 1, **dadurch gekennzeichnet, dass** die Oberseite (14) des Plattenkörper (10) mindestens eine Rille zur Aufnahme eines temperierbaren Elements aufweist.

3. Vorrichtung nach Anspruch 1, **dadurch gekennzeichnet, dass** die Oberseite (14) des Plattenkörpers (10) mehrere Haltevorsprünge (15) zur beidseitigen Anlage an einem temperierbaren Element aufweist.

4. Vorrichtung nach einem der Ansprüche 1 bis 3, **dadurch gekennzeichnet, dass** zunächst die Oberseite (14) des Plattenkörpers (10) mit einer Folie (24) überzogen ist.

5. Vorrichtung nach einem der Ansprüche 1 bis 4, **dadurch gekennzeichnet, dass** an der Unterseite (12) des Plattenkörpers (10) eine Trittschalldämmschicht (22) und/oder eine Ausgleichsmaterialschicht zum Ausgleichen von Unebenheiten eines Untergrundes angeordnet ist.

6. Vorrichtung nach Anspruch 5, **dadurch gekennzeichnet, dass** die Trittschallisolationsschicht bzw. die Ausgleichsmaterialschicht aus Polyolefinoder Polymermaterial besteht.

7. Vorrichtung nach Anspruch 6, **dadurch gekennzeichnet, dass** das Polyolefin- oder Polymermaterial geschäumt ist.

8. Vorrichtung nach Anspruch 6 oder 7, **dadurch gekennzeichnet, dass** das Polyolefin- oder Polymermaterial Polyethylen ist.
